# EUROPÄISCHE PATENTSCHRIFT

(11) **EP 3 459 204 B1**
(45) Veröffentlichungstag und Bekanntmachung des Hinweises auf die Patenterteilung: **14.04.2021**
(21) Anmeldenummer: 17724562.8
(22) Anmeldetag: 19.05.2017
(51) Int. Cl.: H04L 12/10

(54) **VERFAHREN ZUR REALISIERUNG EINER DIAGNOSEFÄHIGKEIT VON NICHT-AUTOMOTIVE-STEUERGERÄTEN IN EINEM AUTOMOTIVE-UMFELD**
METHOD FOR IMPLEMENTING A DIAGNOSIS CAPABILITY OF NON-AUTOMOTIVE CONTROLLERS IN AN AUTOMOTIVE ENVIRONMENT
PROCÉDÉ DE MISE EN OEUVRE D'UNE CAPACITÉ À DIAGNOSTIQUER DE DISPOSITIFS DE COMMANDE NON AUTOMOBILES DANS UN ENVIRONNEMENT AUTOMOBILE

(30) Priorität: 19.05.2016 DE 102016208671
(43) Veröffentlichungstag der Anmeldung: 27.03.2019
(73) Patentinhaber: Hirschmann Car Communication GmbH, 72654 Neckartenzlingen (DE)
(72) Erfinder: LAUSTERER, Markus, 72639 Neuffen (DE); BÖHMERT, Roland, 72764 Reutlingen (DE)
(74) Vertreter: Patentanwaltskanzlei WILHELM & BECK
(86) Internationale Anmeldenummer: PCT/EP2017/062159
(87) Internationale Veröffentlichungsnummer: WO 2017/198844

(56) Entgegenhaltungen:
- EP-A2- 2 190 094
- DE-A1-102006 034 422
- DE-A1-102008 057 751
- DE-B3-102014 224 642

## Beschreibung

Die Erfindung betrifft eine Systemanordnung sowie ein Verfahren zum Betreiben einer solchen Systemanordnung, die ein erstes Steuergerät aufweist, an das ein weiteres Steuergerät angeschlossen ist, wobei das erste Steuergerät über eine Datenverbindung mit dem weiteren Steuergerät verbunden ist und darüber Daten austauscht, und das erste Steuergerät mit dem weiteren Steuergerät über eine Stromverbindung verbunden ist und darüber das weitere Steuergerät mit Energie aus einer Energiequelle versorgt, gemäß den Merkmalen des jeweiligen Oberbegriffes der beiden unabhängigen Patentansprüche.

Seit geraumer Zeit werden immer öfter Anwendungen aus dem Consumer-Elektronik-Bereich auch im Automotive-Umfeld eingesetzt. Allerdings sind viele der dafür notwendigen Bauteile/Controller oft nicht für Automotive-Anwendungen (Anforderungen hinsichtlich der Temperaturen, deren Schwankungen, Feuchtigkeit, Stoßbeanspruchung, Vibrationen und dergleichen) qualifiziert. Das bedeutet, dass die Hardware (Treiberbausteine) gar nicht oder teilweise nicht die Temperaturbereiche besitzen, die im Automotive-Umfeld auftreten können. Um die Hardware hier zu schützen, muss in der Regel das gesamte Steuergerät, welches zum Beispiel ein solches nicht-Automotive-konformes Bauteil beinhaltet, abgeschaltet werden. Allerdings gibt es hier oft durch die unterschiedliche örtliche Verbauung in einem Fahrzeug keine gesicherte Aussage, wann das Steuergerät selber abgeschaltet werden muss, da der Main-Controller beziehungsweise das Master-Steuergerät eine andere Temperatur-Umgebung haben kann als das Steuergerät. Eine zu späte Abschaltung kann bereits zu Fehlfunktion oder sogar zu Defekten des Steuergerätes führen. Ebenso kann das Einschalten im kritischen Temperaturbereich zu einem Defekt des Bauteils führen.

Die EP 2 190 094 A2 beschreibt ein Verfahren zum Bereitstellen von Strom für Verbraucher in einem Busgerät, bei dem eine Strombegrenzung erfolgt, wobei eine maximale Busstromstärke von zumindest einer von mehreren Größen abhängig festgelegt wird.

Die folgende Erfindung beschäftigt sich nun damit, eine Möglichkeit zu schaffen, einen Defekt solcher Steuergeräte beim Betrieb in einem Fahrzeug zu verhindern. Zum Schutz der Hardware werden die nicht-Automotive-konformen Bauteile im Steuergerät nur im gültigen Temperaturbereich betrieben und in nachteiliger Weise bei Über- bzw. Untertemperatur abgeschaltet. Die Abschaltung kann aber auch aus anderen Gründen stattfinden.

Als Schnittstellen zwischen den Steuergeräten können, müssen aber nicht, Standard-USB-Schnittstellen (1.0, 2.0, ..) verwendet werden. Solch eine Schnittstelle besteht im Allgemeinen aus 4 Pins (VBus 5V, Ground, D+, D-). Meldet sich ein Device über die Datenleitungen (D+, D-) nicht beim Host an, kann über diese USB Schnittstelle nicht kommuniziert werden.

Der Erfindung liegt daher die Aufgabe zugrunde, die vorstehend genannten Anforderungen zu erfüllen und eine sichere Datenübertragung zwischen zwei Steuergeräten einer Systemanordnung zu ermöglichen.

Diese Aufgabe ist durch die Merkmale der beiden unabhängigen Patenansprüche gelöst.

Hinsichtlich der Systemanordnung ist erfindungsgemäß vorgesehen, dass das erste Steuergerät eine Messeinheit und das weitere Steuergerät eine Lasteinheit aufweist. Die Lasteinheit des weiteren Steuergerätes, die in die Stromverbindung zwischen den beiden Steuergeräten geschaltet ist, beeinflusst den Stromfluss, wobei diese Beeinflussung des Stromflusses von der Messeinheit des ersten Steuergerätes erfasst wird. Während eines normalen Betriebes wird ein bestimmter Stromfluss, zum Beispiel eine Stromstärke, ermittelt, der in vorgebbaren Grenzen schwanken kann. Diese Schwankungen unterliegen der Belastung der beiden Steuergeräte, wenn zum Beispiel Daten ausgetauscht werden. Die Bandbreite dieser Schwankungen kann vorgegeben werden. Mittels der Lasteinheit des weiteren Steuergerätes ist es möglich, den Stromfluss zwischen den beiden Steuergeräten zu beeinflussen, sodass der Stromfluss die vorher festgelegte Bandbreite unter- und/oder überschreiten kann. Das Verlassen der Bandbreite ist so gewählt, dass dadurch die normale Stromversorgung des weiteren Steuergerätes durch das erste Steuergerät nicht beeinträchtigt wird. Jedoch ist es möglich, diesen Stromfluss durch die Lasteinheit zu beeinflussen, wobei die Beeinflussung von der Messeinheit des ersten Steuergerätes erfasst werden kann. Durch eine entsprechende Auswertung dieses beeinflussten Stromflusses ermöglicht eine Datenübertragung zwischen den beiden Steuergeräten, und zwar unabhängig von der Datenverbindung zwischen den beiden Steuergeräten. Das bedeutet, dass in vorteilhafter Weise die Stromverbindung der beiden Steuergeräte zur Datenübertragung genutzt wird, wobei dies unabhängig von der eigentlichen bestehenden Datenverbindung zwischen den beiden Steuergeräten erfolgen kann. Dadurch wird entweder ein redundanter Datenaustausch zwischen den beiden Steuergeräten sichergestellt oder es ist nach wie vor eine Datenübertragung möglich, wenn, aus welchen Gründen auch immer, die eigentliche Datenverbindung zwischen den beiden Steuergeräten einen Datenaustausch nicht mehr zulässt.

Mit dieser Erfindung besteht nun in vorteilhafter Weise trotzdem die Möglichkeit, eine simple Kommunikation von einem Steuergerät zu einem weiteren Steuergerät, zum Beispiel einem Main-Controller, in einem Fahrzeug aufzubauen, um zum Beispiel eine einfache Temperatur- oder Fehlfunktionsübertragung zu realisieren, während eine andere Kommunikation nicht vorhanden ist.

In Weiterbildung der Erfindung weist das erste Steuergerät eine mit der Messeinheit verbundene Steuereinheit auf. Mit der Steuereinheit ist es möglich, die von der Messeinheit ermittelten Parameter, vor allen Dingen der beeinflusste Stromfluss, aber auch die über die Datenverbindung ausgetauschten Daten, zu erfassen und entsprechende Aktionen auszulösen. Dazu ist die Steuereinheit so ausgebildet, dass sie die Daten, die über die eigentliche Datenverbindung ausgetauscht werden, erfasst und weiterbearbeitet beziehungsweise eigene Daten auf die Datenverbindung schickt. Zusätzlich ist die Steuereinheit dazu ausgebildet, den von der Messeinheit beeinflussten Stromfluss zu erfassen und entsprechende Aktionen daraus zu generieren.

In Weiterbildung der Erfindung weist das weitere Steuergerät eine mit der Lasteinheit verbundene Steuereinheit auf. Diese Steuereinheit ist dazu ausgebildet, nicht nur den Datenaustausch über die Datenverbindung mit dem ersten Steuergerät zu gewährleisten, sondern auch einen Datenaustausch über die Stromverbindung zwischen den beiden Steuergeräten zu ermöglichen. Hierzu kann die Steuereinheit des weiteren Steuergerätes die Lasteinheit beispielsweise getaktet ansteuern, um damit einen beispielsweise rechteckförmigen Stromfluss über die Stromverbindung zu generieren, wobei dieser getaktete Stromfluss einen Datenstrom darstellt, der wiederum von der Messeinheit des ersten Steuergerätes erfasst und von der Steuereinheit des ersten Steuergerätes ausgewertet und weiterverarbeitet werden kann.

In Weiterbildung der Erfindung ist das weitere Steuergerät eine Speichereinheit nach dem USB-Standard und weist eine mit der Steuereinheit verbundene Treibereinheit auf. Hierdurch wird es möglich, ein Steuergerät, welches nach dem USB-Standard (hinsichtlich der Datenübertragung, der Stromversorgung und des mechanischen Anschlusses) zu verwenden und in das erste Steuergerät einzustecken beziehungsweise mit diesem über einem Kabel zu verbinden und gleichzeitig eine sichere Datenverbindung herzustellen. Diese sichere Datenverbindung wird, wie auch vorstehend schon beschrieben, darin gesehen, dass die Datenübertragung nicht nur standardmäßig über die Datenverbindung erfolgt, sondern alternativ oder ergänzend auch über die Stromverbindung zwischen den beiden Geräten erfolgen kann.

Hinsichtlich des Verfahrens zum Betreiben einer Systemanordnung ist erfindungsgemäß vorgesehen, dass mit einer Messeinheit des ersten Steuergerätes der Stromfluss über die Stromverbindung gemessen wird und der Stromfluss mittels einer Lasteinheit des weiteren Steuergerätes zur Datenübertragung zwischen den beiden Steuergeräten über die Stromverbindung beeinflusst wird. Auch hier ist wiederum der Vorteil gegeben, dass in einem normalen Betriebsfall die Datenübertragung zwischen den beiden Steuergeräten über die Datenverbindung und die Stromversorgung des weiteren Steuergerätes, das an das erste Steuergerät angeschlossen ist, über eine Stromverbindung zwischen diesen beiden Steuergeräten erfolgt. Ist die Datenübertragung zwischen den beiden Steuergeräten über die Datenverbindung aus welchen Gründen auch immer fehlerhaft, gestört oder ausgefallen, ermöglicht es das Zusammenspiel zwischen der Lasteinheit und der Messeinheit, dass die Stromverbindung nicht nur zur Stromversorgung, sondern auch zur Datenübertragung eingesetzt werden kann. Denkbar ist auch, einen Teil der zu übertragenden Daten über die Datenverbindung und einen anderen Teil der Datenübertragung über die Stromverbindung zwischen den beiden Steuergeräten zu realisieren.

Zur Steuerung der Datenübertragung zwischen den beiden Steuergeräten über deren Stromverbindung wird, wie vorstehend schon erläutert, die Messeinheit des ersten Steuergerätes von einer Steuereinheit gesteuert beziehungsweise der von der Messeinheit gemessene Stromfluss von der Steuereinheit des ersten Steuergerätes ausgewertet. Ebenso wird der Stromfluss von einer Lasteinheit des weiteren Steuergerätes gesteuert. Hierzu ist eine Steuereinheit in dem weiteren Steuergerät vorhanden, sodass die Steuerung des Stromflusses über die Steuereinheit dieses weiteren Steuergerätes erfolgt.

In Weiterbildung der Erfindung ist vorgesehen, dass die Beeinflussung des Stromflusses derart erfolgt, dass aus der Beeinflussung ein binärer Datenstrom resultiert. Durch die Beeinflussung des Stromflusses mittels der Lasteinheit des weiteren Steuergerätes, die über dessen Steuereinheit erfolgt, kann (neben der normalen Stromübertragung zwischen den beiden Steuergeräten) der Stromfluss so getaktet werden, dass die Messeinheit des ersten Steuergerätes einen binären Datenstrom erfasst, der an die zugehörige Steuereinheit weitergeleitet und weiterverarbeitet werden kann. Der binäre Datenstrom ermöglicht damit in vorteilhafter Weise den zusätzlichen beziehungsweise redundanten Datenaustausch zu der eigentlichen Datenverbindung zwischen den beiden Steuereinheiten.

Ein Ausführungsbeispiel einer erfindungsgemäßen Systemanordnung, die mit dem erfindungsgemäßen Verfahren betrieben werden kann, wird im Folgenden anhand der Figuren erläutert.

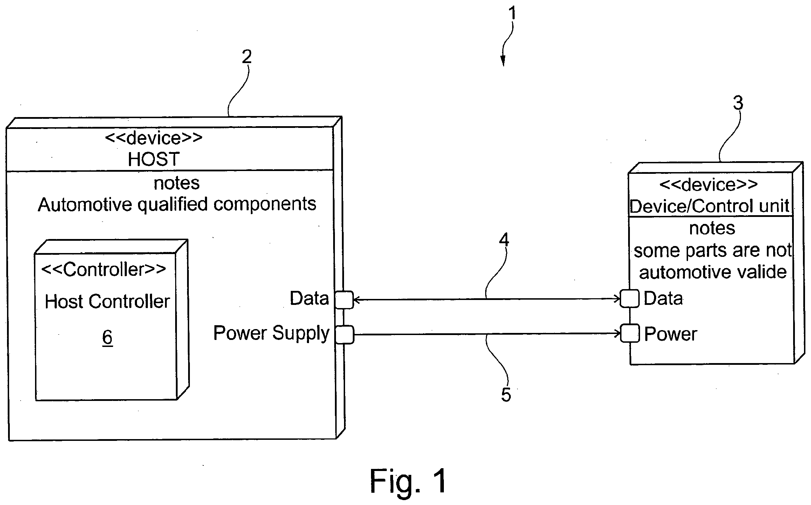

Die Figur 1 zeigt, soweit im Einzelnen dargestellt, eine Systemanordnung 1, die ein erstes Steuergerät 2 und ein weiteres Steuergerät 3 aufweist. Die beiden Steuergeräte 2, 3 sind einerseits über eine Datenverbindung 4 zwecks Datenaustausch und über eine Stromverbindung 5 zwecks Energieversorgung miteinander verbunden. Die beiden Verbindungen 4, 5 erfolgen beispielsweise über ein Kabel, wobei es auch denkbar ist, dass das weitere Steuergerät 3 einen entsprechenden Steckverbinder integriert aufweist, wobei dieses weitere Steuergerät 3 in einen entsprechenden Gegensteckverbinder, der in dem ersten Steuergerät 2 integriert ist, eingesteckt werden kann. Vorzugsweise erfolgt die Verbindung für den Datenaustausch und die Energieversorgung sowie die mechanische Verbindung zwischen den beiden Steuergeräten 2, 3 nach dem USB-Standard. Die mechanische Verbindung zwischen den beiden Steuergeräten 2, 3 kann dem USB-Standard, beispielsweise einen Consumer-USB-Standard entsprechen, muss es aber nicht. Denkbar ist auch, eine Steckverbindung nach einem anderen allgemeinen oder proprietären Standard zu verwenden. Beispielsweise kommen auch Steckverbindungen in Betracht, die den automotiven Anforderungen entsprechen, beispielsweise FAKRA-Steckverbindungen.

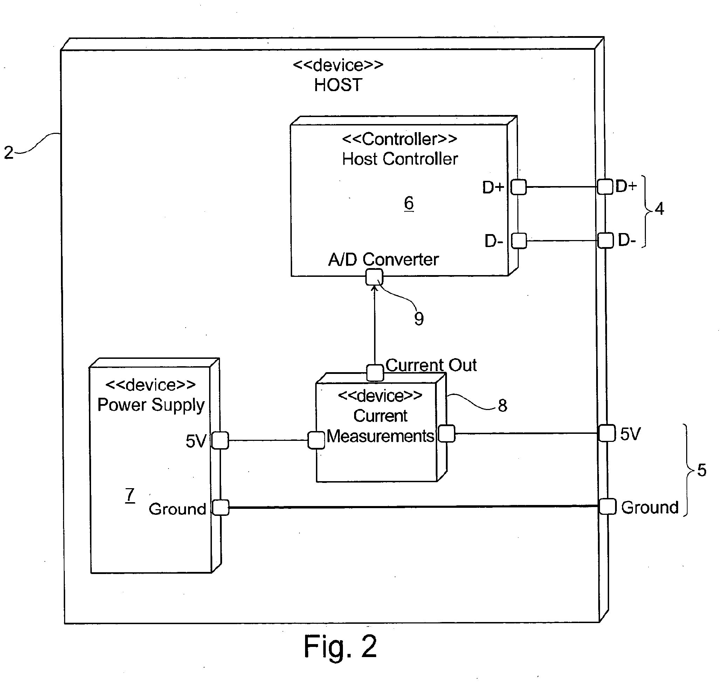

Figur 2 zeigt das erste Steuergerät 2 mit wesentlichen Elementen. Es weist eine Steuereinheit 6 auf, die mit der Datenverbindung 4 verbunden ist. Außerdem weist das erste Steuergerät 2 eine Energiequelle 7 auf, über die die Stromversorgung über die Stromverbindung 5 des weiteren Steuergerätes 3 erfolgt. In diese Stromverbindung zwischen dem weiteren Steuergerät 3 und der Energiequelle 7 ist eine Messeinheit 8 geschaltet. Die Messeinheit 8 erfasst den Stromfluss der Stromverbindung 5 und gibt diesen an die Steuereinheit 6 weiter. Die Steuereinheit 6 ist dazu ausgebildet, den mit der Messeinheit 8 gemessenen Stromfluss auszuwerten, zu verarbeiten und daraus innerhalb des ersten Steuergerätes 2 entsprechende Aktionen zu generieren bzw. diese aufbereiteten Daten über eine nicht weiter dargestellte Schnittstelle an weitere Geräte (auch nicht dargestellt) abzugeben. In dem Ausführungsbeispiel gemäß Figur 2 weist die Steuereinheit 6 einen A-D-Wandler auf, der den analog mit der Messeinheit 8 gemessenen Stromfluss in ein digitales Signal umwandelt, welches von der Steuereinheit 6 weiterverarbeitet werden kann. Die Energiequelle 7 des ersten Steuergerätes 2 ist beispielsweise eine Batterie oder ein Akkumulator, der eine Stromversorgung von beispielsweise 5 Volt erzeugt und über die Stromverbindung 5 abgibt. Andere Spannungsbereiche sind selbstverständlich denkbar, wobei 5 Volt üblicherweise nach dem USB-Standard verwendet werden. Während in dem Ausführungsbeispiel gemäß Figur 2 der AD-Wandler in der Steuereinheit 6 vorhanden ist, ist es auch denkbar, dass der AD-Wandler als einzelne, das heißt separate Komponente abgesetzt, von der Steuereinheit 6 anzuordnen. In diesem Fall kann der AD-Wandler über eine entsprechend ausgebildete Kommunikationsstelle an der Steuereinheit 6 angeschlossen sein und über diese Schnittstelle Signale austauschen.

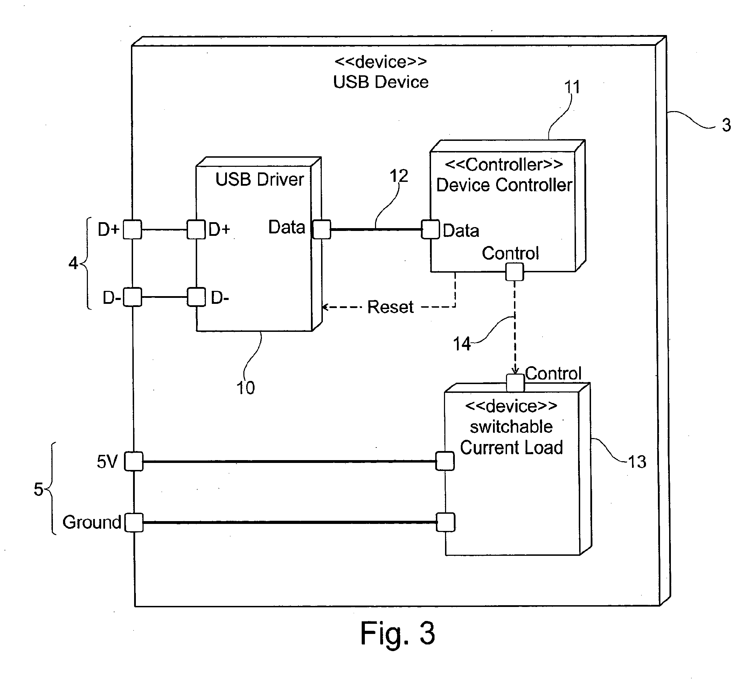

Figur 3 zeigt Details des weiteren Steuergerätes 3. Dieses weist in üblicher Weise eine Treibereinheit 10 auf, mit der der Datenaustausch zwischen den beiden Steuergeräten 2, 3 organisiert wird, wenn das weitere Steuergerät 3 an das erste Steuergerät 2 angeschlossen ist. In diesem Ausführungsbeispiel soll das weitere Steuergerät 3 ein USB-Gerät sein, muss es aber nicht. Daher ist die Treibereinheit 10 auch als USB-Treiber bezeichnet. Weiterhin weist das weitere Steuergerät 3 eine Steuereinheit 11 auf, die über eine Datenverbindung 12 mit der Treibereinheit 10 zwecks Steuerung des Datenaustausches zwischen den beiden Steuergeräten 2, 3 verbunden ist. Weiterhin weist das weitere Steuergerät 3 eine Lasteinheit 13, insbesondere eine schaltbare Lasteinheit, auf. Diese Lasteinheit 13 ist über eine Steuerverbindung 14 mit der Steuereinheit 11 verbunden. Über die Steuereinheit 11 wird die Lasteinheit 13 angesteuert, insbesondere getaktet angesteuert. Durch Ansteuerung der Lasteinheit 13 über die Steuereinheit 11 wird der Stromfluss über die Stromverbindung 5 beeinflusst, vorzugsweise getaktet. Dies erfolgt zusätzlich zu der eigentlichen Stromversorgung, sodass diese trotz der Beeinflussung mittels der Lasteinheit 13 hinsichtlich der eigentlichen Stromversorgung des weiteren Steuergerätes 3 durch das erste Steuergerät 2 über die Stromverbindung 5 nicht beeinträchtigt wird. Die Steuereinheit 11 des weiteren Steuergerätes 3 ist dazu ausgebildet, einerseits die Datenübertragung zwischen den beiden Steuergeräten 2, 3 über die Datenverbindung 4 und die Treibereinheit 10 zu managen und gleichzeitig einen Datenaustausch über die Stromverbindung 5 zwischen den beiden Steuergeräten 2, 3 durch Ansteuerung der Lasteinheit 13 zu ermöglichen. Dieser Datenaustausch über die Stromverbindung 5 erfolgt entweder zusätzlich zu dem Datenaustausch über die Datenverbindung 4 oder nur noch über die Stromverbindung 5, wenn die Datenverbindung 4 fehlerhaft ist oder ausgefallen sein sollte.

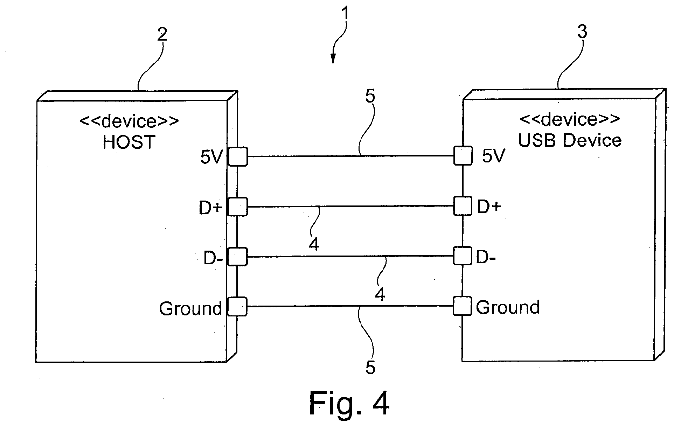

Figur 4 zeigt noch einmal prinzipiell die Systemanordnung 1 nach der Erfindung, wobei das erste Steuergerät 2 ein beliebiges Steuergerät ist und das weitere Steuergerät 3 eine Speichereinheit nach dem USB-Standard darstellt. Es muss sich jedoch nicht um eine reine Speichereinheit bei dem weiteren Steuergerät 3 handeln, sondern es kann auch ein beliebiges anderes Steuergerät sein.

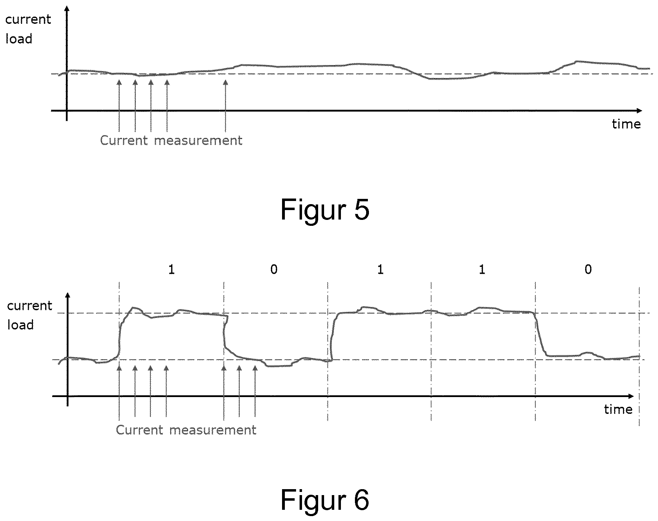

In den Figuren 5 und 6 ist der Stromfluss zwischen den beiden Steuergeräten 2, 3 über die Stromverbindung 5 ohne (Figur 5) und mit (Figur 6) Beeinflussung dargestellt.

In Figur 5 ist der Verlauf des Stromflusses über die Stromverbindung 5 zwischen den beiden Steuergeräten 2, 3 über die Zeit (X-Achse) gezeigt. Es ist erkennbar, dass der Stromfluss in einer gewissen Bandbreite (um die gestrichelte Linie herum) in seiner Größe (Y-Achse) schwanken kann.

In Figur 6 ist dargestellt, dass der Verlauf des Stromflusses über die Zeit mittels der entsprechenden Ansteuerung der Lasteinheit 13 des weiteren Steuergerätes 3 beeinflusst, vorzugsweise getaktet wird. Die Last der Lasteinheit 13 ist so eingestellt, dass dann, wenn sie beispielsweise angesteuert wird, die Stromstärke (Y-Achse) ansteigt und wieder auf das vorgegebene Niveau (gemäß Figur 5 die gestrichelte Linie) fällt, wenn sie ausgeschaltet wird. Durch diese Taktung entsteht ein binärer Datenstrom, der somit über die Stromverbindung 5 an das erste Steuergerät 2 übertragen und von dessen Messeinheit 8 ausgewertet und weitergegeben werden kann. Zur Verdeutlichung ist in Figur 6 als beispielhafter Datenstrom eine Ziffernfolge von "1", "0", "1", "1", "0" dargestellt. Dies ist rein beispielhaft und richtet sich selbstverständlich nach der Belastung des Stromkreises mittels der Lasteinheit 13, die entsprechend angesteuert wird. Es muss sich auch nicht zwangsweise ein rechteckförmiger Verlauf ergeben, sondern es ist auch eine Beeinflussung des Stromflusses durch die Lasteinheit 13 denkbar, die nicht getaktet ist, sondern die einen kontinuierlich veränderlichen Stromfluss (zum Beispiel Sinusform) darstellt. Die Beeinflussung des Stromflusses mittels der Lasteinheit 13 ist dabei selbstverständlich so gewählt, dass dadurch die eigentliche Stromversorgung des Weiteren Steuergerätes 3 durch das erste Steuergerät 2 nicht oder nicht wesentlich beeinträchtigt ist.

### Bezugszeichenliste

- 1.: Systemanordnung
- 2.: Erstes Steuergerät
- 3.: Weiteres Steuergerät
- 4.: Datenverbindung
- 5.: Stromverbindung
- 6.: Steuereinheit
- 7.: Energiequelle
- 8.: Messeinheit
- 9.: A/D-Wandler
- 10.: Treibereinheit
- 11.: Steuereinheit
- 12.: Datenverbindung
- 13.: Lasteinheit
- 14.: Steuerverbindung

## Patentansprüche

1. Systemanordnung (1), die ein erstes Steuergerät (2) aufweist, an das ein weiteres Steuergerät (3) angeschlossen ist, wobei das erste Steuergerät (2) über eine Datenverbindung (4) mit dem weiteren Steuergerät (2) verbunden ist und darüber Daten austauscht **dadurch gekennzeichnet, dass** das erste Steuergerät (2) mit dem weiteren Steuergerät (3) über eine Stromverbindung (5) verbunden ist und darüber das weitere Steuergerät (3) mit Energie aus einer Energiequelle (7) versorgt, wobei das erste Steuergerät (2) eine Messeinheit (8) aufweist, mit der ein Stromfluss über die Stromverbindung (5) gemessen werden kann, und das weitere Steuergerät (3) eine Lasteinheit (13) aufweist, mittels der der Stromfluss zur Datenübertragung zwischen den beiden Steuergeräten (2, 3) über die Stromverbindung (5) beeinflusst werden kann.

2. Systemanordnung (1) nach Anspruch 1, **dadurch gekennzeichnet, dass** das erste Steuergerät (1) eine mit der Messeinheit (8) verbundene Steuereinheit (6) aufweist.

3. Systemanordnung (1) nach Anspruch 1 oder 2, **dadurch gekennzeichnet, dass** das weitere Steuergerät (3) eine mit der Lasteinheit (13) verbundene Steuereinheit (11) aufweist.

4. Systemanordnung (1) nach Anspruch 3, **dadurch gekennzeichnet, dass** das weitere Steuergerät (3) eine Speichereinheit nach dem USB-Standard ist und eine mit der Steuereinheit (11) verbundene Treibereinheit (11) aufweist.

5. Verfahren zum Betreiben einer Systemanordnung (1), die ein erstes Steuergerät (2) aufweist, an das ein weiteres Steuergerät (3) angeschlossen ist, wobei das erste Steuergerät (2) über eine Datenverbindung (4) mit dem weiteren Steuergerät (2) Daten austauscht **dadurch gekennzeichnet, dass** das erste Steuergerät (2) mit dem weiteren Steuergerät (3) über eine Stromverbindung (5) das weitere Steuergerät (3) mit Energie aus einer Energiequelle (7) versorgt, wobei mit einer Messeinheit (8) des ersten Steuergerätes (2) der Stromfluss über die Stromverbindung gemessen wird und der Stromfluss mittels einer Lasteinheit (13) des weiteren Steuergerätes (3) zur Datenübertragung zwischen den beiden Steuergeräten (2, 3) über die Stromverbindung (5) beeinflusst wird.

6. Verfahren nach Anspruch 5, **dadurch gekennzeichnet, dass** der mit der Messeinheit (8) gemessene Stromfluss von einer Steuereinheit (6) des ersten Steuergerätes (1) ausgewertet wird.

7. Verfahren nach Anspruch 5, **dadurch gekennzeichnet, dass** der Stromfluss von einer Lasteinheit (13) des weiteren Steuergerätes (3) gesteuert wird.

8. Verfahren nach Anspruch 6, **dadurch gekennzeichnet, dass** die Steuerung des Stromflusses über eine Steuereinheit (11) des weiteren Steuergerätes (3) erfolgt.

9. Verfahren nach Anspruch 5, 6, 7 oder 8, **dadurch gekennzeichnet, dass** die Beeinflussung des Stromflusses derart erfolgt, dass aus der Beeinflussung ein binärer Datenstrom resultiert.

## Claims

1. System arrangement (1) having a first control device (2), to which a further control device (3) is connected, wherein the first control device (2) is connected to the further control device (2) via a data connection (4) and interchanges data via the latter, **characterized in that**
the first control device (2) is connected to the further control device (3) via a current connection (5) and supplies the further control device (3) with energy from an energy source (7) via said current connection, wherein the first control device (2) has a measuring unit (8) which can be used to measure a current flow via the current connection (5), and the further control device (3) has a load unit (13) which can be used to influence the current flow for transmitting data between the two control devices (2, 3) via the current connection (5).

2. System arrangement (1) according to Claim 1, **characterized in that** the first control device (1) has a control unit (6) connected to the measuring unit (8).

3. System arrangement (1) according to Claim 1 or 2, **characterized in that** the further control device (3) has a control unit (11) connected to the load unit (13).

4. System arrangement (1) according to Claim 3, **characterized in that** the further control device (3) is a storage unit according to the USB standard and has a driver unit (11) connected to the control unit (11).

5. Method for operating a system arrangement (1) having a first control device (2), to which a further control device (3) is connected, wherein the first control device (2) interchanges data with the further control device (2) via a data connection (4), **characterized in that**
the first control device (2) with the further control device (3) supplies the further control device (3) with energy from an energy source (7) via a current connection (5), wherein a measuring unit (8) of the first control device (2) is used to measure the current flow via the current connection, and the current flow for transmitting data between the two control devices (2, 3) via the current connection (5) is influenced by means of a load unit (13) of the further control device (3).

6. Method according to Claim 5, **characterized in that** the current flow measured using the measuring unit (8) is evaluated by a control unit (6) of the first control device (1).

7. Method according to Claim 5, **characterized in that** the current flow is controlled by a load unit (13) of the further control device (3).

8. Method according to Claim 6, **characterized in that** the current flow is controlled via a control unit (11) of the further control device (3).

9. Method according to Claim 5, 6, 7 or 8, **characterized in that** the current flow is influenced in such a manner that a binary data stream results from the influence.

## Revendications

1. Arrangement de système (1), qui possède un premier contrôleur (2) auquel est raccordé un contrôleur supplémentaire (3), le premier contrôleur (2) étant connecté au contrôleur supplémentaire (2) par le biais d'une liaison de données (4) et échangeant des données par le biais de celle-ci, **caractérisé en ce que** le premier contrôleur (2) est connecté au contrôleur supplémentaire (3) par le biais d'une liaison électrique (5) et, par le biais de celle-ci, alimente le contrôleur supplémentaire (3) avec de l'énergie provenant d'une source d'énergie (7),
le premier contrôleur (2) possédant une unité de mesure (8), avec laquelle peut être mesuré un flux de courant sur la liaison électrique (5), et le contrôleur supplémentaire (3) possédant une unité de charge (13), avec laquelle peut être influencé le flux de courant servant à la transmission de données entre les deux contrôleurs (2, 3) par le biais de la liaison électrique (5) .

2. Arrangement de système (1) selon la revendication 1, **caractérisé en ce que** le premier contrôleur (1) possède une unité de commande (6) reliée à l'unité de mesure (8).

3. Arrangement de système (1) selon la revendication 1 ou 2, **caractérisé en ce que** le contrôleur supplémentaire (3) possède une unité de commande (11) reliée à l'unité de charge (13).

4. Arrangement de système (1) selon la revendication 3, **caractérisé en ce que** le contrôleur supplémentaire (3) possède une unité de mémoire selon la norme USB et une unité de circuit de pilotage (11) reliée à l'unité de commande (11).

5. Procédé pour faire fonctionner un arrangement de système (1), qui possède un premier contrôleur (2) auquel est raccordé un contrôleur supplémentaire (3), le premier contrôleur (2) échangeant des données avec le contrôleur supplémentaire (2) par le biais d'une liaison de données (4), **caractérisé en ce que**
le premier contrôleur (2) avec le contrôleur supplémentaire (3) alimente le contrôleur supplémentaire (3) avec de l'énergie provenant d'une source d'énergie (7) par le biais d'une liaison électrique (5),
le flux de courant sur la liaison électrique étant mesuré avec une unité de mesure (8) du premier contrôleur (2) et le flux de courant étant influencé au moyen d'une unité de charge (13) du contrôleur supplémentaire (3) en vue de la transmission de données entre les deux contrôleurs (2, 3) par le biais de la liaison électrique (5) .

6. Procédé selon la revendication 5, **caractérisé en ce que** le flux de courant mesuré avec l'unité de mesure (8) est interprété par une unité de commande (6) du premier contrôleur (1).

7. Procédé selon la revendication 5, **caractérisé en ce que** le flux de courant est commandé par une unité de charge (13) du contrôleur supplémentaire (3).

8. Procédé selon la revendication 6, **caractérisé en ce que** la commande du flux de courant s'effectue par le biais d'une unité de commande (11) du contrôleur supplémentaire (3).

9. Procédé selon la revendication 5, 6, 7 ou 8, **caractérisé en ce que** l'influence du flux de courant est effectuée de telle sorte qu'un courant de données binaire résulte de l'influence.
